# EUROPEAN PATENT APPLICATION

(11) **EP 4 098 703 A1**
(43) Date of publication of application: **07.12.2022**
(21) Application number: 21748321.3
(22) Date of filing: 26.01.2021
(51) Int. Cl.: C09C 1/64, C09C 3/08, C09C 3/06, C09D 5/10, B22F 1/02, B82Y 30/00, B22F 9/08

(54) **METALLIC PIGMENTS WITH CORROSION-RESISTANT COATINGS**

(30) Priority: 28.01.2020 RU 2020104070
(71) Applicant: Obshchestvo S Ogranichennoj Otvetstvennost'Yu "Institut Legkikh Materialov I Tekhnologij", Moscow 119049 (RU)
(72) Inventor: GARSHEV, Aleksej Viktorovich, g. Krasnoyarsk, 660111 (RU); PUTLYAEV, Valerij Ivanovich, g. Krasnoyarsk, 660111 (RU); EVDOKIMOV, Pavel Vladimirovich, g. Krasnoyarsk, 660111 (RU); KOZLOV, Daniil Anreevich, g. Krasnoyarsk, 660111 (RU); TIKHONOV, Andrej Aleksandrovich, g. Krasnoyarsk, 660111 (RU); TIKHONOVA, Snezhana Alekseevna, g. Krasnoyarsk, 660111 (RU); ORLOV, Nikolaj Konstantinovich, g. Krasnoyarsk, 660111 (RU); PETROV, Aleksandr Kirillovich, g. Krasnoyarsk, 660111 (RU); MAMAEVA, Yuliya Borisovna, g. Krasnoyarsk, 660111 (RU); FEDYANIN, Andrej Anatol'evich, g. Krasnoyarsk, 660111 (RU); CHETVERTUKHIN, Artem Vyacheslavovich, g. Krasnoyarsk, 660111 (RU); SHARIPOVA, Margarita Il'gizovna, g. Krasnoyarsk, 660111 (RU); SHULEJKO, Dmitrij Valer'evich, g. Krasnoyarsk, 660111 (RU); MIKHAJLOV, Ivan Yur'evich, g. Krasnoyarsk, 660111 (RU); POLYAKOV, Sergej Vital'evich, g. Krasnoyarsk, 660111 (RU)
(74) Representative: Tobiasz-Dumania, Katarzyna
(86) International application number: PCT/RU2021/050020
(87) International publication number: WO 2021/154123

(57) **Abstract**

The invention relates to metallic pigments based on aluminum and/or alloys thereof and methods for their manufacture that have a nucleus/shell structure and additionally protection against corrosion, and a method of producing and of using pigments of such a structure. The technical result is to improve the corrosion resistance of metallic pigments based on aluminum and alloys thereof when they are used in coatings for external application in strongly corrosive media; said result is achieved by applying a continuous transparent corrosion protection layer to the surface of the metallic pigment in an organic solvent medium with the use of specially selected organic salts and additives. Using coatings with a refractive index from 1.4 to 1.8 involves a technical solution to the problem of producing a metallic pigment and using it for matte coatings while maintaining a metallic sheen.

## Description

### Field of the invention

The invention relates to metallic pigments based on aluminium and/or its alloys, methods for their production, which have a core/shell structure and have additional protection against various types of corrosion, a method for their production, and the use of pigments having such structure. A method of manufacturing lacquers and water-based paints based on these pigments, as well as the use of these lacquers and paints as a paint coating with anti-corrosion properties.

### State of the art

Application of coatings to aluminium particles is associated with a number of difficulties due to the presence of a strong oxide film on their surface, which prevents satisfactory adhesion of the deposited coating to aluminium. The most wide-spread methods of preparing the aluminium surface for coating are the contact method, the electrochemical method, and through the application of oxide films.

Both organic and inorganic components can be used as coatings for aluminium flakes.

From the prior art, a method is known (see EP 0633297) for the production of an aluminium pigment suitable for adding to water-based paint used for coating car bodies. The pigment has excellent stability, the color of the final coating and adhesion to the metal, wherein after obtaining aluminium flakes they are treated with an alkaline aqueous solution containing ammonium molybdate, after treatment with ammonium molybdate, water and unreacted reagents are removed from the reaction system, the flakes are washed and filtered. The amount of the resulting film of molybdic acid is in the range of 0.1 to 10 wt.% in terms of Mo. After the first treatment, the aluminium flakes are subjected to a second treatment with a phosphoric acid compound to form phosphoric films on the previously treated aluminium flakes. The phosphoric acid compound used as the second treatment agent includes its inorganic or organic compounds and their salts. The property of phosphoric acid compounds as an agent for improving the corrosion resistance of an aluminium pigment is known. The amount of the resulting phosphoric film is in the range from 0.05 to 1 wt.% in terms of P.

A method is known (see CN 107163625) for obtaining a colored water-based aluminium powder pigment coated with iron (III) oxide with a low glossiness, a color from grayish-green to khaki with improved anti-corrosion characteristics for use in water-soluble paints. The method includes the following stages: adding aluminium paste and isopropanol to the reaction container and stirring at a temperature of 40 to 50°C for 0.5-2 hours; adding an aqueous solution of H₂O₂ with a mass fraction of 5.0 to 8.0% dropwise at a constant rate; then adding the aqueous solution of the mixed salt of Fe³⁺ and Fe²⁺ dropwise at a constant rate for 3-6 hours and adding the diluted ammonia water dropwise to control the pH value, which should be in the range of 4.4 to 5.4; and stirring is continued for 3 to 6 hours. Then, filtration is carried out and a colored aluminium pigment coated with iron (III) oxide is obtained.

The international patent application (see WO 2012/113886) describes a lamellar pigment containing a metal oxide having a metal core made of elemental aluminium and/or an aluminium alloy.

The production of multilayer pigments with oxide layers is disclosed in WO 2000/009617 and US 6776835, while the pigment is coated with two or more layers of metal oxide exclusively in an aqueous medium by the reaction method in one vessel.

An aluminium pigment is known (see JP 2004124069) with a silica coating, wherein the aluminium particle is coated with a multilayer silica film with a thickness of 0.5 to 5 nm, which is generated in the form of several layers on the surface of the aluminium particle. The method for producing a silica gel-coated aluminium pigment includes the stage of dispersing aluminium particles in a solution containing a hydrolysis catalyst, water and a hydrophilic organic solvent, and the stage of adding a solution that includes a Si-containing compound to the dispersion, while the maximum sedimentation rate of the silica film is ≤ 3 nm/h.

A metallic lustrous pigment is known (see WO 2015/014484), which includes aluminium plates with a thickness in the range of 1-50 nm, having a solid structure, optionally passivated and surrounded by at least a coating B consisting of a metal oxide, which has a refractive index of at least 1.9. Coating B has a thickness of at least 50 nm and consists of a metal oxide selected from the group consisting of iron (III) oxide, chromium (III) oxide, vanadium (V) oxide, titanium (III) oxide, titanium dioxide and/or zirconium oxide. Between the surface of the aluminium plates and the coating B, there is at least one additional coating A surrounding the plates, consisting of at least one oxide, which has a refractive index not exceeding 1.8, and which is selected from the group consisting of SiO₂, B₂O₃, MnO₂, MgO, GeO₂ and Al₂O₃. The plates contain an additional coating C, which differs from the underlying coating B and consists of silicon dioxide, silicon oxide hydrate, aluminium oxide, aluminium oxide hydrate, zinc oxide, tin oxide, titanium dioxide, zirconium oxide, iron (III) oxide or chromium (III) oxide. The method makes it possible to obtain a lustrous metal pigment with a high coverage, to reduce its flammability and explosion hazard. These pigments can be used to prepare lacquers, printing paints, inks, polymeric materials, glasses, ceramics, and decorative cosmetics compositions.

A method is known (see WO 2011/095341) for coating pigments with silicon oxide, wherein alkoxysilane(s) and/or silicon halide(s) react in an organic solvent with water in the presence of pigments, where the reaction includes at least two stages, at which (a) the reaction is carried out by adding an acid and an alkali is added in the second stage, or in which (b) the reaction is carried out by adding an alkali and adding an acid in the second stage. These pigment particles are corrosion resistant and have improved opacity and/or gassing stability.

A pigment is known (see WO 2008/095697) consisting of a lamellar metal core and a homogeneous coating of synthetic resin covering the specified lamellar metal core, wherein the synthetic resin coating contains a polyacrylate and/or polymethacrylate and an organofunctional silane. The resulting pigment is resistant to chemicals and corrosion, as well as electrically conductive.

The prior art discloses the use of hybrid layers for coating metal pigment particles. For example, pigments are known (see WO 2013/064643), which contain at least one layer of a metal oxide, which is different from aluminium oxide, and an enveloping layer of an organic polymer. These pigments are resistant to oxidation in an aqueous medium while maintaining optical properties that do not change over time, which, in particular, ensures color stability.

A method is known (see WO 2016/120015) for obtaining and applying an effective protective coating for metal objects. A high protective effect is achieved by adapting the inorganic fraction and the organic polymer fraction of the coating to the specific surface of the object. The described method makes it possible to obtain pigments with increased stability and improved optical properties, wherein the pigment contains a metal substrate and at least one inorganic/organic hybrid layer, wherein the hybrid layer contains at least one metal oxide, at least one compound forming a grid (gridding agent), and at least one organic polymer, wherein at least one metal oxide is not a product of oxidation of the metal substrate, and the term 'metal oxide' includes oxides, hydroxides and oxide hydrates of metals, and semimetals, at least partially covalently bonded to the metal oxide and organic polymer, wherein the ratio of the amount of metal oxide of the coating to the specific surface area of the unpainted metal pigment is in the range from 16.1 mg/m² to 25 mg/m², and the ratio of the amount of the organic polymer of the inorganic/organic hybrid layer to the specific surface of the unpainted metal pigment is in the range of in the range from 3.9 mg/m² to 10.1 mg/m².

A method is known (see EP 3081601) to obtain a translucent mother-of-pearl coating. The method includes the following steps: obtaining a solid metal plate having an average thickness of 1 to 40 nm and a ratio of average size to average thickness of at least 80, coating the plate with a transparent layer consisting of at least one metal oxide and/or a low-factor metal oxide hydrate having a refractive index of less than 1.8, coating a metal plate with at least one interference layer in the form of coating B, consisting of at least one high-factor metal oxide having a refractive index of at least 1.8, the coatings are applied by hydrolytic decomposition of one or more organometallic compounds and/or by sedimentation of one or more dissolved metal salts, then baking out of such a coating at 550 to 1200°C, preferably at 600 to 1200°C, for 4 to 12 hours.

Also, aluminium flakes are coated to ensure their stability in aqueous solutions. A polymer coating is known (see US patent 5104922), wherein a phosphated acrylic polymer neutralized with ammonia or a primary, secondary or tertiary amine is used as a film-forming polymer and containing flaky metal pigments with a mass ratio of pigment and binder of about 30 / 100 - 1000 / 100 and not reacting with the binder, while the dispersion has a pH of about 7-9.

High corrosion resistance of aluminium phosphate is known. Methods are known (see EP 2987838, WO 1992/001023) for obtaining highly corrosion-resistant pigments based on pure aluminium phosphate. In these cases, the pigment does not have a metallic luster, which can be obtained when using metal powders based on aluminium and/or its alloys as an initial blank. Thus, the use of metal pigments based on aluminium and/or its alloys as a "core", with an additionally applied transparent layer, can preserve the metallic shade, and at the same time increase the pigment resistance to various types of corrosion, which will make it possible to use these pigments in water-based paints for outer coatings in highly corrosive environments.

The closest to the claimed one is a thin lamellar metal pigment highly resistant to corrosion and a method for its production, as well as coloured lustrous pigments based on it (see WO 2006/066825), which is obtained by applying several protective coatings. These coatings are obtained by treating the surface of a thin flake of a metal pigment with phosphoric and/or boric acid compounds, as well as by applying an additional layer of silicon oxide. The pigment treated in this way is subjected to an additional treatment step to increase the corrosion resistance, which includes the application of a hydrated layer of tin oxide by adding an aqueous solution of tin salts to the aqueous dispersion of pigments with a pre-applied layer. This pigment and the method for its production are taken as the prototype of the present invention.

The disadvantages of the described invention are, firstly, the need for pretreatment of the pigment to apply additional sub-layers to the surface of the pigment to protect it from corrosion, and secondly, the application of the last protective layer of hydrated tin oxide occurs in an aqueous medium. All this leads to an increase in the degradation (dissolution) of the processed pigment, which in turn affects the optical properties of the final product, as well as a decrease in its corrosion resistance.

### Invention disclosure

The objective of the present invention is to obtain metal pigments based on aluminium and its alloys, which have an increased resistance to various types of corrosion due to the coating of the pigment with an additional protective layer, which increases the chemical resistance of the pigment when used in outer coatings in highly aggressive environments, as well as in water-based paints and lacquers and the use of these lacquers and paints as paint coatings.

The technical result of the invention is to solve the problem, increase the corrosion resistance of metal pigments based on aluminium and its alloys when used in outer coatings in highly aggressive environments, which is achieved by applying a continuous transparent corrosion-protective layer on the surface of the metal pigment in an organic solvent environment using specially selected organic salts and additives. The use of coatings with a refractive index of 1.4 to 1.8 includes a technical solution to the problem of obtaining a metal pigment and its use for matte coatings while maintaining the metallic shade. The size distribution of the plates matters in the case of matte coatings.

Aluminium and/or its alloys are used as the metal pigment material, and the initial pigment blank has an aluminium content of at least 85% of the mass, while the plates themselves have a thickness of 1 to 300 nm, at the same time, the plates have an elliptical shape, and the diameter 1 (the characteristic longitudinal size of the ellipse, equal to the double value of the semi-major axis) is from 2 to 50 µm, and the diameter 2 (the characteristic transverse size of the ellipse, equal to the double value of the semi-minor axis) is no less than 70% and not more than 100% of the diameter 1. Preferably, a protective transparent coating with a refractive index of 1.48 to 1.58 is used. In an organic solvent, a protective coating is applied to the surface of aluminium particles by hydrolytic decomposition of one or more organic metal compounds (for example, Alₙ-Rₘ, where R is CₓO_{y}H_{z}N_{w}Sᵥ) and/or by precipitation with one or more of dissolved metal salts in a solvent medium (for example, isopropyl alcohol), wherein the coating thickness is at least 3 nm, in the range from 1 to 250 nm, with an oxygen content of at least 52%, phosphorus of at least 25%, and aluminium of at least 22%, or silicon. It is also possible to additionally treat with at least one layer of surfactant to modify the surface. To obtain a metal "core" - plates of pigment based on aluminium and/or its alloys, grinding in ball mills in an organic solvent medium is used for aluminium and/or its alloy-based particles obtained by separating a fraction of a certain size from powders obtained by pulverizing aluminium melt or its alloy in a flow and in an inert gas environment.

Metal matte pigment based on aluminium and/or its alloys is used in compositions for use in outer coatings in highly aggressive environments; for this purpose, the paint material is prepared, which includes the stage of mixing the pigment with a solvent, adding active components that increase it stability during dispersion, as well as improving its adhesion properties, including the use of components that improve the spreading of the composition on the surface to be coated. Water can be used as the base of the paint material for the outer coating.

### Brief description of drawings

Fig. 1. The structure of the metallic matte pigment with the anti-corrosion coating according to the present invention. The aluminium "core" is surrounded by a continuous layer of aluminium phosphate.
Fig. 2. Test results for Test A (described below) of various metallic pigments with various types of coatings. Determination of gas volume evolution over time under specified conditions.
Fig. 3. Test results for Test B (described below) of various metallic pigments with various types of coatings. Determination of gas volume evolution over time under specified conditions.
Fig. 4. Test results for Test C (described below) of various metallic pigments with various types of coatings. Determination of gas volume evolution over time under specified conditions.
Fig. 5. Test results according to Test D (described below) of various metal pigments with various types of coatings. Determination of gas volume evolution over time under specified conditions.
Fig. 6. Photographs of the colouring of various metallic pigments based on aluminium and its alloys with various types of coatings obtained as a result of the optical tests described below.

### Embodiment of invention

The following examples illustrate the invention without limiting it.

### Example 1

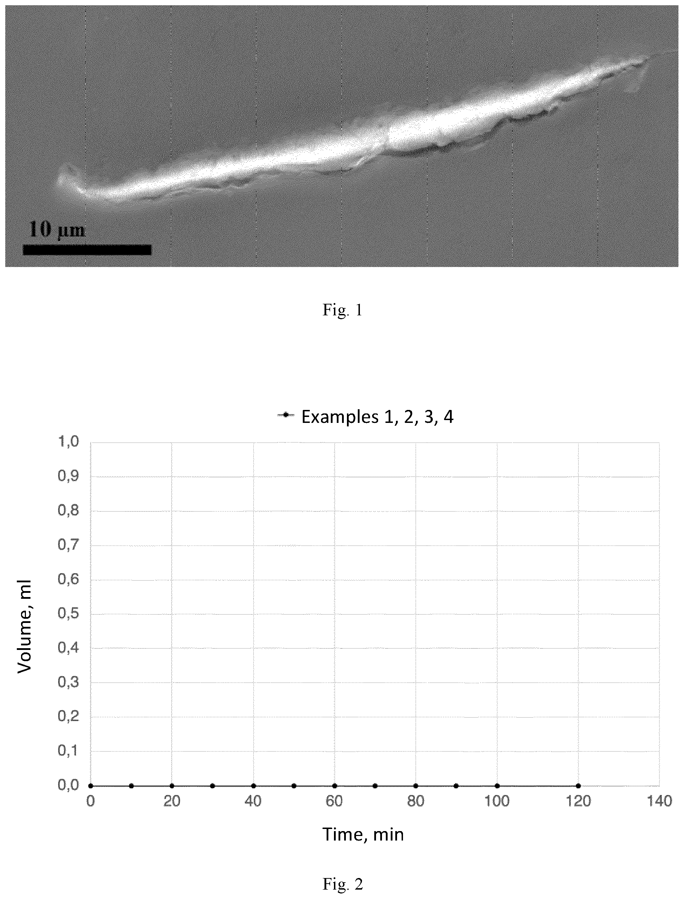

In this example, 39.6 g of aluminium isopropylate was dissolved in 3000 ml of isopropyl alcohol in a round-bottomed flask. The resulting solution was heated to 80°C; a reflux condenser was used to prevent the removal of the organic solvent from the reaction mixture. After complete dissolution of aluminium isopropylate, 200 g of aluminium plates (aluminium content: no less than 98%, with a thickness ranging from 100 to 200 nm and an average diameter of 20 µm) were added to the solution and dispersed by stirring. Hydrochloric acid was added in a controlled manner to the resulting dispersion to maintain pH = 3.5. Subsequently, 38.8 ml of concentrated phosphoric acid was added in 3 hours, while the pH value continued to be maintained around 3 by the constant addition of ammonia. After the addition of all the necessary reagents was completed, the resulting mixture was stirred for an additional 4 hours. The resulting coated aluminium plates were filtered using a Buchner funnel and washed, then dried in stages at 100°C, then at 300°C for 3 and 2 hours, respectively. Fig. 1 shows the structure of the resulting coated pigment. The resulting product was evaluated for its chemical resistance to aggressive environments and its optical characteristics were assessed as described below.

### Example 2

In this example, the same conditions were used as in Example 1, except that 316.8 g was used instead of 39.6 g of aluminium isopropylate, and the amount of phosphoric acid was 310.4 ml. The resulting product was evaluated for its chemical resistance to aggressive environments and its optical characteristics were assessed as described below.

### Example 3

For comparative tests, an aluminium pigment with a SiO₂ coating was obtained. An aluminium-based metal pigment was used as a blank, as in Example 1. To apply a layer of silicon oxide, tetraethoxysilane was used, which was added in an amount of 20 g to 562 ml of isopropyl alcohol, brought to the boil, and 58 g of aluminium plates were added according to Example 1. Over 3 hours, 22.5 ml of diluted ammonia solution was added gradually. After an additional 3 hours of stirring, the resulting suspension was filtered and dried at 100°C. The resulting product was evaluated for its chemical resistance to aggressive environments and its optical characteristics were assessed as described below.

### Example 4

In this example, the same conditions were used as in Example 1, except that instead of aluminium plates, plates based on an aluminium alloy with an aluminium content of at least 85% were chosen. The resulting product was evaluated for its chemical resistance to aggressive environments and its optical characteristics were assessed as described below.

### Tests for chemical resistance to aggressive media

### Test A

0.07 g of the resulting product according to examples 1-3 was dispersed in 4.5 ml of the solution until a homogeneous dispersion was obtained. The resulting mixture was added to a solution of 7 g of CaO in 350 ml of solution. The container was sealed, and the volume of the released gas was measured using a gas volume meter according to GOST 5494-95. Measurements were carried out 5 times for reproducibility of the result, but not longer than two hours. Fig. 2 presents the results, it was shown that all the tested pigments according to examples 1-3 show no gas emission within 2 hours, which indicates their stability under these conditions.

### Test B

In this test, the same conditions were used as in Test A, except for the use of 350 ml of sodium hydroxide solution with a concentration of 10⁻³ M NaOH.

### Test C

In this test, the same conditions were used as in Test B, except for the use of sodium hydroxide solution with a concentration of 10⁻² M NaOH.

### Test D

In this test, the same conditions were used as in Tests B and C, except for the use of sodium hydroxide solution with a concentration of 10⁻¹ M NaOH.

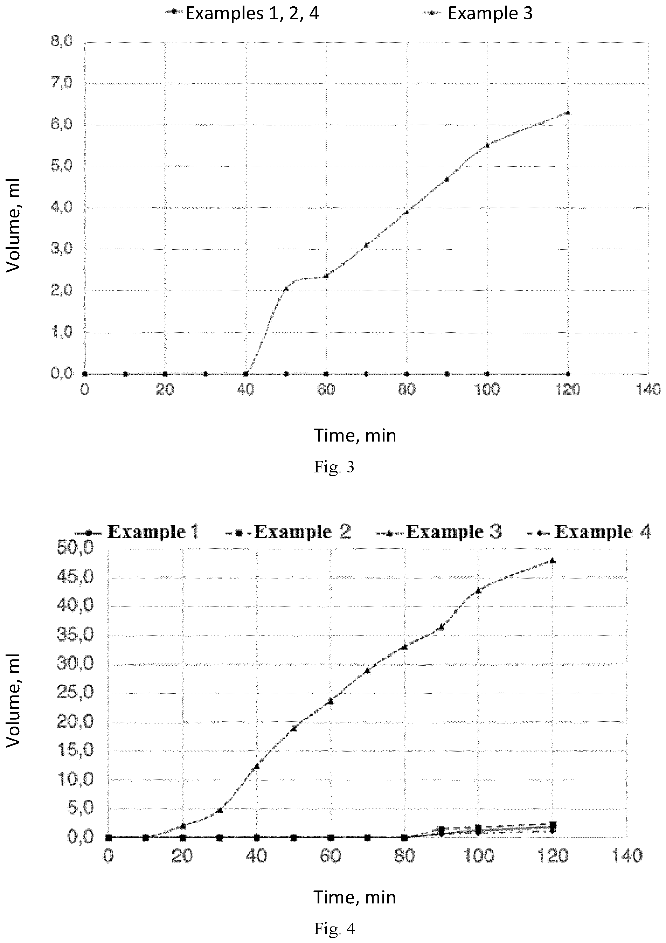

Figs. 3, 4 and 5 show the average gas emission results of the final products as a result of the experiments carried out in Tests B, C, and D, respectively. The resulting products according to Examples 1, 2 and 4 did not show gas emission during 2 hours, as a result of Tests B and C, during the experiments according to Test D, an insignificant amount of gas emission was shown 70 minutes after the start of the experiment. At the same time, the pigments obtained according to Example 3 begin to emit gas, which means they react with the reaction solution in all tests performed, after 40 minutes during Test B, after 15 minutes during Test C and after 2 minutes according to the results of Test D.

Thus, the products according to Example 3 have a lower chemical resistance to more aggressive environments than the pigments according to examples 1, 2 and 4. This is due to the fact that the silicon oxide layer is removed under the influence of concentrated sodium hydroxide, and the aluminium "core" is attacked with a solution of the corresponding alkali through the formed cavities, while the resulting coating according to Examples 1, 2 and 4 allows to keep the "core" of the pigment from external interaction for a longer time. The obtained metal pigments based on aluminium and/or its alloys according to the proposed invention show an increased resistance to various types of corrosion.

### Optical properties tests

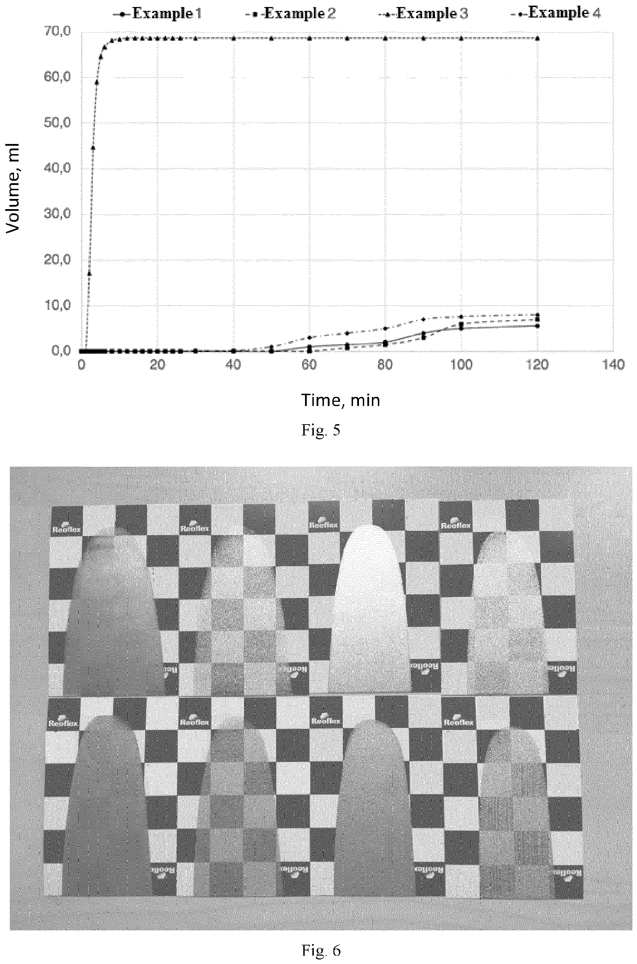

Based on the obtained products according to Examples 1-4, paint materials of the following composition were prepared: 15% of the pigment (obtained according to Examples 1, 2, 3 or 4), 9.25% of Solvesso 150 solvent, 0.75% of a surfactant, 52.5% of a binder, the rest is the diluent. As an additional reference sample, a paint composition was prepared with the same ratios as described above, except for the use of an aluminium pigment without any coating. The colouring operations were made using the RDS 20 applicator on thick paper. Fig. 6 shows the obtained colourings on the basis of the obtained paints materials. It can be seen that compared to the pigment according to Example 3 and the pilot aluminium pigment without coating, the pigments according to Examples 1, 2 and 4 do not give a metallic luster.

Taking the objective, the result, the essence of the invention, as well as examples of embodiment into account, the extent of protection is sought in the form of the following set of features:
1. Metal pigment based on aluminium and/or its alloys with an anti-corrosion coating in the form of a shell, characterized in that:
   aluminium plates distributed in the pigment contain at least 85 wt.% aluminium, have a thickness in the range from 1 to 300 nm, preferably from 30 to 250 nm, have a predominantly elliptical shape, with the diameter (1) being the characteristic longitudinal size of an ellipse, equal to the double value of the semi-minor axis, is from 2 to 50 µm, and the diameter (2) being the characteristic transverse size of the ellipse, equal to the double value of the semi-minor axis, is no less than 70% and not more than 100% of the diameter (1);
   the coating in the form of a shell is obtained by keeping the metal core of the pigment in a non-aqueous solution of an organic salt of metal or metals, has a refractive index of 1.4 to 1.8, preferably from 1.45 to 1.65.
2. The metal pigment according to claim 1, characterized in that the coating is based on compounds of non-metals, in particular, such as phosphorus, chlorine, fluorine, oxygen, with metals, in particular, such as aluminium, potassium, sodium, which have a refractive index from 1.48 to 1.58.
3. Metal pigment according to claim 2, characterized in that the coating based on a combination of non-metals with metal is made with a phosphorus content of at least 25 wt.%, oxygen of at least 52 wt.% and aluminium of at least 22 wt.%.
4. Metal pigment according to claim 2, characterized in that the coating is made on the basis of an oxygen compound with a silicon content of at least 46 wt.%.
5. The metal pigment according to any of claims 1-4, characterized in that the coating has a thickness of up to 250 nm, preferably in the range of 5 nm to 200 nm.
6. The metal pigment according to claim 1, characterized in that the aluminium plates in the pigment have a thickness in the range from 35 nm to 150 nm, and the coating is made on the basis of aluminium phosphate and has a thickness in the range from 10 nm to 200 nm.
7. The metal pigment according to any of claims 1-6, characterized in that the surface of the coating contains at least one surfactant from the group: phosphoric acid esters, alcohols, ketones or mixtures thereof.
8. A method for producing a metal pigment based on aluminium and/or its alloys with an anti-corrosion coating in the form of a shell, characterized in that a metal pigment is obtained according to any of claims 1-7, wherein the method comprises the stage of obtaining pigment cores in the form of metal pigment plates by milling in an organic solvent medium of particles based on aluminium and/or its alloys obtained by separating a fraction of a given size from powders obtained by the atomization of an aluminium melt and/or its alloy in an inert gas flow.
9. The method for producing a metal pigment according to claim 8, comprising the stage of creating an anti-corrosion coating, wherein the dispersion of the metal pigment in the organic solvent medium is exposed so that the anti-corrosion layer is applied on the metal core of the pigment in the form of pigment metal plates by means of hydrolytic decomposition of one or more organic metal compounds and/or by precipitation of one or more dissolved metal salts in the solvent medium.
10. The method according to claim 9, characterized in that Alₙ-Rₘ is used as the organic compound, where R is CₓO_{y}H_{z}N_{w}Sᵥ, wherein x for C is from 6 to 20, y for O is from 6 to 60, z for H is from 20 to 100, w for N is from 3 to 30, y for S is from 4 to 30.
11. The method according to claim 9 or claim 10, characterized in that (i-C₃H₇O)₃Al is used as the organic compound.
12. The method according to claim 9, characterized in that isopropyl alcohol is used as the application medium.
13. The use of metal pigments based on aluminium and/or its alloys according to any of claims 1-7 in compositions for use in outer coatings in highly aggressive environments to increase the resistance of coatings to various types of corrosion, wherein the preparation of the material includes the stage of mixing the pigment with a solvent, the use of additional components that increase its stability during dispersion, improve its adhesion properties, as well as components that improve the spreading of the composition on the surface to be coated, in particular, the use of modified polysilaxanes as an additive.
14. The use of metal pigments based on aluminium and/or its alloys according to claim 13, characterized in that water is used as the basis of the material for the outer matte coating of the product, in particular, a water-soluble paint coating is used.

## Claims

1. Metal pigment based on aluminium and/or its alloys with an anti-corrosion coating in the form of a shell, **characterized in that**:
- aluminium plates distributed in the pigment contain at least 85 wt.% aluminium, have a thickness in the range from 1 to 300 nm, preferably from 30 to 250 nm, have a predominantly elliptical shape, with the diameter (1) being the characteristic longitudinal size of an ellipse, equal to the double value of the semi-minor axis, is from 2 to 50 µm, and the diameter (2) being the characteristic transverse size of the ellipse, equal to the double value of the semi-minor axis, is no less than 70% and not more than 100% of the diameter (1);
- the coating in the form of a shell is obtained by keeping the metal core of the pigment in a non-aqueous solution of an organic salt of metal or metals, has a refractive index of 1.4 to 1.8, preferably from 1.45 to 1.65.

2. The metal pigment according to claim 1, **characterized in that** the coating is based on compounds of non-metals, in particular, such as phosphorus, chlorine, fluorine, oxygen, with metals, in particular, such as aluminium, potassium, sodium, which have a refractive index from 1.48 to 1.58.

3. Metal pigment according to claim 2, **characterized in that** the coating based on a combination of non-metals with metal is made with a phosphorus content of at least 25 wt.%, oxygen of at least 52 wt.% and aluminium of at least 22 wt.%.

4. Metal pigment according to claim 2, **characterized in that** the coating is made on the basis of an oxygen compound with a silicon content of at least 46 wt.%.

5. The metal pigment according to any of claims 1-4, **characterized in that** the coating has a thickness of up to 250 nm, preferably in the range of 5 nm to 200 nm.

6. The metal pigment according to claim 1, **characterized in that** the aluminium plates in the pigment have a thickness in the range from 35 nm to 150 nm, and the coating is made on the basis of aluminium phosphate and has a thickness in the range from 10 nm to 200 nm.

7. The metal pigment according to any of claims 1-6, **characterized in that** the surface of the coating contains at least one surfactant from the group: phosphoric acid esters, alcohols, ketones or mixtures thereof.

8. A method for producing a metal pigment based on aluminium and/or its alloys with an anti-corrosion coating in the form of a shell, **characterized in that** a metal pigment is obtained according to any of claims 1-7, wherein the method comprises the stage of obtaining pigment cores in the form of metal pigment plates by milling in an organic solvent medium of particles based on aluminium and/or its alloys obtained by separating a fraction of a given size from powders obtained by spraying an aluminium melt and/or its alloy in an inert gas flow.

9. The method for producing a metal pigment according to claim 8, comprising the stage of creating an anti-corrosion coating, wherein the dispersion of the metal pigment in the organic solvent medium is exposed so that the anti-corrosion layer is applied on the metal core of the pigment in the form of pigment metal plates by means of hydrolytic decomposition of one or more organic metal compounds and/or by precipitation of one or more dissolved metal salts in the solvent medium.

10. The method according to claim 9, **characterized in that** Alₙ-Rₘ is used as the organic compound, where R is CₓO_{y}H_{z}N_{w}Sᵥ, wherein x for C is from 6 to 20, y for O is from 6 to 60, z for H is from 20 to 100, w for N is from 3 to 30, y for S is from 4 to 30.

11. The method according to claim 9 or claim 10, **characterized in that** (i-C₃H₇O)₃Al is used as the organic compound.

12. The method according to claim 9, **characterized in that** isopropyl alcohol is used as the application medium.

13. The use of metal pigments based on aluminium and/or its alloys according to any of claims 1-7 in compositions for use in outer coatings in highly aggressive environments to increase the resistance of coatings to various types of corrosion, wherein the preparation of the material includes the stage of mixing the pigment with a solvent, the use of additional components that increase its stability during dispersion, improve its adhesion properties, as well as components that improve the spreading of the composition on the surface to be coated, in particular, the use of modified polysilaxanes as an additive.

14. The use of metal pigments based on aluminium and/or its alloys according to claim 13, **characterized in that** water is used as the basis of the material for the outer matte coating of the product, in particular, a water-soluble paint coating is used.
